# EUROPEAN PATENT SPECIFICATION

(11) **EP 2 678 819 B1**
(45) Date of publication and mention of the grant of the patent: **17.05.2017**
(21) Application number: 12750146.8
(22) Date of filing: 16.02.2012
(51) Int. Cl.: G06Q 50/10, G06F 17/24, G06Q 20/12

(54) **ELECTRONIC BOOK EXTENSION SYSTEMS AND METHODS**
VERLÄNGERUNGSSYSTEME UND -VERFAHREN FÜR ELEKTRONISCHE BÜCHER
SYSTÈMES ET PROCÉDÉS S'APPLIQUANT À DES EXTENSIONS POUR LIVRES ÉLECTRONIQUES

(30) Priority: 24.02.2011 US 201161446239 P; 18.04.2011 US 201113089154; 09.05.2011 US 201113103813
(43) Date of publication of application: 01.01.2014
(73) Proprietor: Google Inc., Mountain View, CA 94043 (US)
(72) Inventor: PATTERSON, James, Mountain View, CA 94043 (US); MOODY, Nathan, Mountain View, CA 94043 (US)
(74) Representative: Maikowski & Ninnemann Patentanwälte Partnerschaft mbB
(86) International application number: PCT/US2012/025438
(87) International publication number: WO 2012/115852

(56) References cited:
- KR-A- 20020 006 129
- US-A1- 2006 161 578
- US-A1- 2007 118 794
- US-A1- 2008 229 182
- US-B2- 6 704 733

## Description

### BACKGROUND

### 1. TECHNICAL FIELD

The invention generally relates to the field of electronic books and, more particularly, to systems and methods for providing third party extensions (or "add-ons") for electronic books for access via electronic devices.

### 2. BACKGROUND INFORMATION

Even as widespread use of the Web reaches its twentieth anniversary, there has been little change in how people make use of books, whether paper books or electronic ones. Both paper books and existing electronic books are "closed" systems in the sense that the consumption experience is predetermined, typically by the book's publisher. That is unfortunate, particularly since different readers may have different reasons for reading a book. For example, a classic novel may be read purely for pleasure or as coursework by a student. Even among students reading the novel, some may be high school students in a general literature class while others may be college political science students reading the book specifically for the perspective it provides on the society in which it is set.

Because of the differing needs of readers, no publisher could hope to accurately determine what subsets of the readers of a work may want to get out of the work. Therefore, explanatory footnotes about historical characters, for example, could be helpful in a study version of a work of historical fiction but might be an unwanted distraction for other readers. Electronic reading devices have not to date provided flexibility to provide related information to readers in a manner that best fits their widely varied interests.

Techniques related to providing annotations of a digital work have been described in the US 2006/0161578 A1.

It would be advantageous to provide improved mechanisms for third parties (e.g., a course instructor) to provide extensions for electronic books that would allow various subsets of readers to obtain, read, study from, and otherwise use more information than is provided by the books alone, yet be presented within the context of the books. The ability to provide such extensions (hereinafter also referred to as "addons") to electronic books would significantly enhance the value of electronic books vis-a-vis their traditional paper counterparts.

### SUMMARY OF THE INVENTION

An electronic book system according to claim 1 includes a publisher processing subsystem permitting a first publisher to supply a book and a second publisher to provide an extension. A distribution subsystem provides the extension to a user's electronic book reader, and an annotation subsystem associates the extension with the book.

The publisher of the book and the publisher of the extension can each define policies regarding the use of the book and the extension, respectively.

In one aspect, the annotation subsystem presents a user interface on the electronic book reader corresponding to use of the extension with the book. In another aspect, the extension is configured for automatic operation upon user attention to a portion of the book, or for automatic presentation of a user interface at a location in the book corresponding to use of the extension. A launch parameter of the extension is related to a displayed portion of the book. Communication with the extension is provided by an application programming interface.

A method of providing an extension for an electronic book according to claim 7 includes selecting the extension for operation with the electronic book, retrieving the extension from a database, and associating the extension for use with the electronic book.

Book and extension policies governing use of the book and extension are retrieved from a database.

In certain aspects, associating the extension includes annotating the electronic book with the extension and presenting a user interface on the electronic book corresponding to use of the extension with the book. In one aspect, user attention to a portion of the book automatically initiates operation of the extension and in a related aspect, associates a launch parameter with the extension. In another aspect, a user interface is provided at a location in the electronic book corresponding to use of the extension. A further aspect includes communicating information relating to the electronic book via an application programming interface with the extension.

A non-transitory computer-readable storage medium containing executable computer program instructions for providing an extension for an electronic book selects the extension for operation with the electronic book, retrieves the extension from a database, and associates the extension for use with the electronic book.

The instructions include instructions to retrieve book and extension policies governing use of the book and extension from a database.

The instructions to associate the extension include instructions to annotate the electronic book with the extension and present a user interface on the electronic book corresponding to use of the extension with the book. The instructions include instructions to automatically initiate operation of the extension, or associate a launch parameter with the extension, in response to user attention to a portion of the book. In another aspect, the instructions provide a user interface at a location in the electronic book corresponding to use of the extension. The instructions provide communication of information relating to the electronic book via an application programming interface with the extension.

The features and advantages described in the specification are not all-inclusive and, in particular, many additional features and advantages will be apparent to one of ordinary skill in the art in view of the drawings, specification, and claims. Moreover, it should be noted that the language used in the specification has been principally selected for readability and instructional purposes, and may not have been selected to delineate or circumscribe the disclosed subject matter.

### BRIEF DESCRIPTION OF THE DRAWINGS

FIG. 1 is a high-level diagram illustrating a networked environment that includes an electronic book reader.
FIG. 2 illustrates a logical view of a reader module used as part of an electronic book reader.
FIG. 3 illustrates a logical view of a system database that stores data related to the content hosting system.
FIG. 4 illustrates a user computer configured as an electronic book reader.
FIG. 5 illustrates a user computer configured as an electronic book reader, including user highlighting and annotations.
FIG. 6 illustrates a user computer configured as an electronic book reader, including a notebook interface.
FIG. 7 is a high level diagram of a system providing distribution of add-ons for electronic books.

The figures depict various embodiments of the present invention for purposes of illustration only. One skilled in the art will readily recognize from the following discussion that alternative embodiments of the structures and methods illustrated herein may be employed without departing from the principles of the invention described herein.

### DETAILED DESCRIPTION

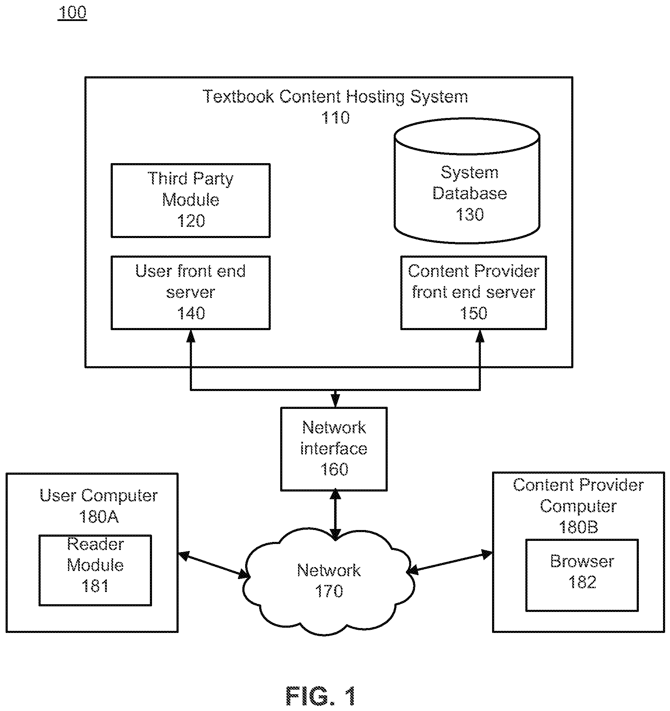

FIG. 1 is a high-level diagram illustrating a networked environment 100 that includes a book content hosting system 110. The embodiment discussed herein is particularly suited for textbooks, but one skilled in the art will recognize that many of the features discussed herein are applicable to various other types of books as well. The content hosting system 110 makes available for purchase, licensing, rental, or subscription textbooks that can be viewed on user and content provider computers 180 (depicted in Fig. 1, for exemplary purposes only, as individual computers 180A and 180B) using a reader module 181 or browser 182. The content hosting system 110 and computers 180 are connected by a network 170 such as a local area network or the Internet.

The network 170 is typically the Internet, but can be any network, including but not limited to any combination of a LAN, a MAN, a WAN, a mobile, a wired or wireless network, a private network, or a virtual private network. The content hosting system 110 is connected to the network 170 through a network interface 160.

As discussed above, only a single user computer 180A is shown, but in practice there are many (e.g., millions of) user computers 180A that can communicate with and use the content hosting system 110. Similarly, only a single content provider computer 180B is shown, but in practice there are many (e.g., thousands or even millions of) content providers 180B that can provide textbooks and related materials for content hosting system 110. In some examples reader module 181 and browser 182 include a content player (e.g., FLASH™ from Adobe Systems, Inc.), or any other player adapted for the content file formats used by the content hosting system 110.

User computer 180A with reader module 181 is used by users to purchase or otherwise obtain, and access, materials provided by the content hosting system 110. Content provider computer 180B is used by content providers to create and provide material for the content hosting system 110. A given computer can be both a client computer 180A and content provider computer 180B, depending on its usage. The hosting service 110 may differentiate between content providers and users in this instance based on which front end server is used to connect to the content hosting system 110, user logon information, or other factors.

The content hosting system 110 comprises a user front end server 140 and a content provider front end server 150, each of which can be implemented as one or more server class computers. The content provider front end server 150 is connected through the network 170 to content provider computer 180B. The content provider front end server 150 provides an interface for content providers to create and manage materials that they would like to make available to users. The user front end server 140 is connected through the network 170 to client computer 180A. The user front end server 140 provides an interface for users to access material created by content providers. In one example, the material (e.g., a digital textbook) is downloaded in its entirety to the user computer upon purchase; in another example the material is streamed to the user only as needed. Generally speaking, textbooks that are more traditional in nature (e.g., including only words and pictures) may be more efficient to use when downloaded all at once to a user computer, while textbooks that include changing data (e.g., actual climatological data), animations, video, interactive applications, and other data-intensive material may more appropriately stream information to the user only as needed. In certain examples, incremental batch fetches, or progressive downloads, are used to retrieve portions (or "chunks") of material at a time. When a user navigates to a portion of an add-on for which material has not yet been downloaded, a corresponding additional chunk of related material is fetched.

The content hosting system 110 is implemented by a network of server class computers that can include one or more high-performance CPUs and 1G or more of main memory, as well as 500 GB to 2Tb of storage. An operating system such as LINUX is typically used. The operations of the content hosting system 110, front end 140 and back end 150 servers as described herein can be controlled through either hardware (e.g., dedicated computing devices or daughter-boards in general purpose computers), or through computer programs installed in computer storage on the servers of the service 110 and executed by the processors of such servers to perform the functions described herein. One of skill in the art of system engineering and, for example, video content hosting will readily determine from the functional and algorithmic descriptions herein the construction and operation of such computer programs.

The content hosting system 110 further comprises a system database 130 that is communicatively coupled to the network 170. The system database 130 stores data related to the content hosting system 110 along with user and system usage information.

The system database 130 can be implemented as any device or combination of devices capable of persistently storing data in computer-readable storage media, such as a hard disk drive, RAM, a writable compact disk (CD) or DVD, a solid-state memory device, or other optical/magnetic storage mediums. Other types of computer-readable storage mediums can be used, and it is expected that as new storage mediums are developed in the future, they can be configured in accordance with the descriptions set forth above.

The content hosting system 110 is further comprised of a third party module 120. The third party module 120 is implemented as part of the content hosting system 110 in conjunction with the components listed above. The third party module 120 provides a mechanism by which the system provides an open platform for additional uses relating to electronic textbooks, much as an application programming interface allows third parties access to certain features of a software program. In some embodiments, third party input may be limited to provision of content via content provider computers 180B and content provider third party server 150. Given the wide range of possible operation of system 110, however, in some embodiments it may be desirable to open additional capabilities for third parties who are not providing content to access the system. For example, anonymous use data from groups of students may be made available via third party module 120 to allow measuring student use of existing textbooks for possible future improvement. As a specific example, aggregated data regarding what sections of a textbook are most often annotated may be helpful to the author of the textbook (or to other authors) to determine where additional explanation of difficult concepts might be warranted.

In this description, the term "module" refers to computational logic for providing the specified functionality. A module can be implemented in hardware, firmware, and/or software. Where the modules described herein are implemented as software, the module can be implemented as a standalone program, but can also be implemented through other means, for example as part of a larger program, as a plurality of separate programs, or as one or more statically or dynamically linked libraries. It will be understood that the named modules described herein represent one example of the present invention, and other examples may include other modules. In addition, other examples may lack modules described herein and/or distribute the described functionality among the modules in a different manner. Additionally, the functionalities attributed to more than one module can be incorporated into a single module. In an embodiment where the modules as implemented by software, they are stored on a computer-readable persistent storage device (e.g., hard disk), loaded into the memory, and executed by one or more processors included as part of the content hosting system 110. Alternatively, hardware or software modules may be stored elsewhere within the content hosting system 110. The content hosting system 110 includes hardware elements necessary for the operations described herein, including one or more processors, high-speed memory, hard disk storage and backup, network interfaces and protocols, input devices for data entry, and output devices for display, printing, or other presentations of data.

Numerous variations from the system architecture of the illustrated content hosting system 110 are possible. The components of the system 110 and their respective functionalities can be combined or redistributed. For example, the system database 130, third party module 120, user front end server 140, and content provider front end server 150 can be distributed among any number of storage devices. The following sections describe in greater detail the reader module 181, system database 130, and the other components illustrated in FIG. 1 in greater detail, and explain their operation in the context of the content hosting system 110.

In one embodiment, add-ons to a book are associated with the book by being "annotated" into the book (i.e., inserting an icon, link, or reference to the add-on in the book at a specific location). For example, in a music theory textbook, a "loudspeaker" icon is added in one example to the book wherever a portion of sheet music is shown in the book; by selecting the icon the reader is provided with an audible rendition of the music that is shown.

Such annotations are added in certain configurations both manually and automatically. Manual annotations (i.e., annotations made in an editorial manner via specific additions at a particular location in the book) are made by the book publisher itself, as well as by instructors, students using the textbook, other students or classmates (e.g., students who previously took the course and used the same book), and third parties who may simply be interested in making the book more useful for a particular purpose. Application programming interfaces provide a mechanism for specifying locations within a book for such annotations.

Automatic annotations do not require direct placement by an editor at a specific location within a book, but instead are inserted based on functional/structural considerations. For example, if implemented as an automatic annotation, the same loudspeaker icon referenced above is placed wherever sheet music is detected within a book. In one example, optical recognition modules (e.g., OCR subsystem 230 discussed below) search the book for portions having sheet music that can be "read" for audio playback, and those are then annotated with the icon as discussed above. Such an add-on need not be specific to one book, but could, when executed, simply implement an algorithm to scan any page being displayed, by any book, for sheet music. Thus, such add-ons are implemented in one environment as corresponding to a specific book and, in another environment, as a standalone, purpose-built software application applicable to all material relating to any publisher, instructor, or user, as the case may be. Again, application programming interfaces provide a mechanism for specifying such operation (e.g., to show an icon for launching the add-on wherever a particular XML feature is found within an electronic book).

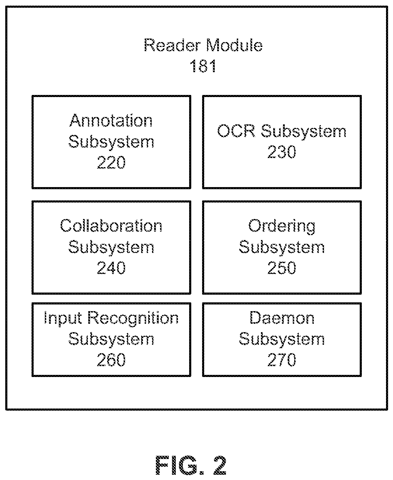

FIG. 2 illustrates a functional view of a reader module 181 used as part of an electronic textbook system. In the example described above in connection with FIG. 1, the reader module is implemented on user computer 180A, but it should be recognized that in other examples, portions discussed herein could also be implemented on other computers (e.g., those in content hosting system 110) that are in communication with reader module 181.

In the example illustrated in FIG. 2, reader module 181 includes an annotation subsystem 220, an OCR subsystem 230, a collaboration subsystem 240, an ordering subsystem 250, an input recognition subsystem 260, and a daemon subsystem 270. Many of these subsystems interact with one another, as described below.

Annotation subsystem 220 provides various user tools and interfaces to allow students to mark up portions of an electronic textbook as they may find most helpful for learning and studying purposes. Annotation subsystem 220 includes conventional features such as highlighting and text entry tools, and also includes more advanced tools. For example, as described below, annotation subsystem 220 keeps track of textbook portions for which a student has provided annotations, and collects those portions into a personalized study guide based on a user command. In some embodiments, add-ons make use of annotation subsystem 220 to determine the specific manner in which an add-on is associated with a book, as described in exemplary fashion herein.

OCR subsystem 230 is a recognition subsystem that takes information not originally in machine-readable form and converts it to machine-readable form. For example, OCR subsystem 230 communicates with annotation subsystem 220 to convert handwritten student notes (entered graphically via finger or stylus gestures on a touch screen, for instance) into machine readable text. As used herein, OCR subsystem 230 includes not only optical character recognition, but other types of recognition as well, for instance: voice-to-text recognition to allow a student to speak rather than write annotations; image to text recognition for photographs the student may take of a professor's notes on a blackboard during a lecture; and other types of recognition as well that may be provided within an electronic textbook or as a third party add-on. As a specific example, one type of recognition that may be helpful in a music theory class is recognition of a sound (a melody) and translation into a visual score (sheet music) for that melody. In certain examples, add-ons make use of OCR subsystem 230 to determine, for example, initial conditions and launch parameters as more fully described below.

Collaboration subsystem 240 provides various user functions that allow students to work together. As detailed below, for example, users can share their annotations and notes with their study group, their entire class, or other users worldwide of their electronic textbook. Further, collaboration subsystem 240 includes social network facilities to permit students to undertake study sessions with audio and visual chat, to ask and answer questions, and to submit questions to professors or teaching assistants. In some examples, add-ons are configured to be collaboration aware through use of collaboration subsystem 240, for instance to generate statistics from one lab group in a class and compare with those from another.

Ordering subsystem 250 represents tools that allow students to obtain electronic textbooks, add-ons, and other related materials. In one example, ordering subsystem 250 is implemented as an electronic marketplace (e.g., the DROID™ marketplace implemented on the ANDROID™ operating system for smart phones and tablet computers). Third parties offer electronic textbooks, add-ons, and other related materials such as study guides, problem sets, updates, workbooks, and the like. Some of these materials are available for purchase; others are free. In some examples, provision via other mechanisms (e.g., subscription, barter, "pay-per-view") is supported, as may be desired by any subset of a student community or content provider group.

Input recognition subsystem 260 provides user interface tools to facilitate use of electronic textbooks and related features. For instance, by sensing particular gestures on a touch screen of user computer 180A, the system temporarily shifts display of a textbook from a current page to a new section, while keeping track of the section of primary interest. Thus, a student working on a problem set section of the textbook can quickly look back at the text of the chapter, or a student reading a section for the first time can quickly jump to a glossary section of the textbook for a definition of an unfamiliar term or concept. In one example, add-ons use input recognition subsystem 260 to provide user control, as appropriate for the purpose of the add-on. For example, a similar mechanism to quickly switching between portions of a text may be used to allow quickly switching between, say, an add-on glossary and the main text of the book.

Reader module 181 is configured to permit add-ons and other user-selected applications to run to enhance a student's ability to work with an electronic textbook. For example, a student may purchase an application that provides study questions on a per-chapter basis for textbooks that do not include such questions. In addition, reader module 181 includes a daemon subsystem 270 to provide additional add-on features without the user launching a visible application for such features. As one example, a music student may have one or more daemons that allow recognition of images of sheet music and audio playback of the corresponding music, or that recognize particular melodies that may be captured by a microphone associated with user computer 180A, or that synthesize musical compositions based on a student's input. In one specific example, a portion of sheet music is optically recognized as a particular melody (e.g., C sharp, B flat, ...), then the recognized melody is used as the basis for a search on a composition, from which a web page is launched with that composition (e.g., a YOUTUBE™ page) so that the
student can play a corresponding audio or video version of the composition. In this manner, a simple four-note progression on a portion of sheet music can automatically pull up live concert footage from a famous orchestra's or rock star's performance of a corresponding musical composition.

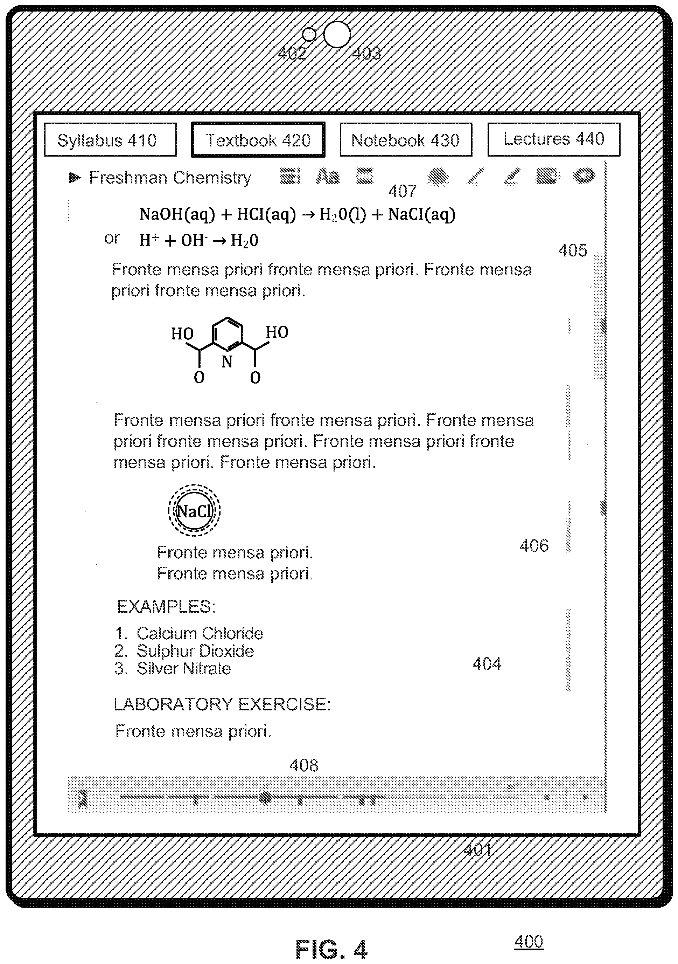

Further detail regarding reader module 181 and various subsystems thereof is provided below in connection with discussion of FIGS 4 - 6.

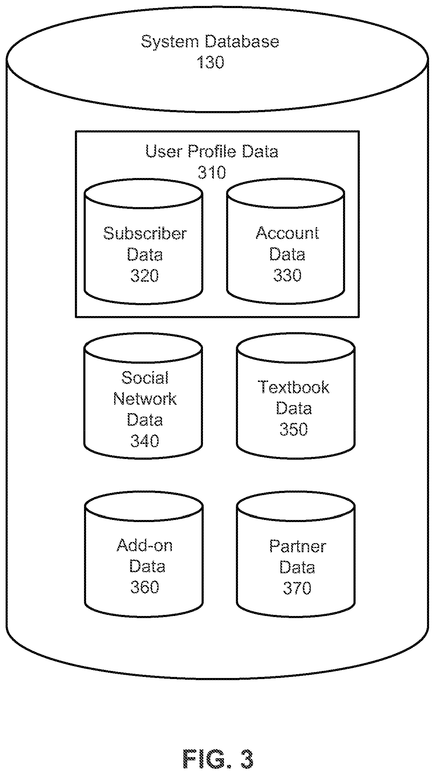

FIG. 3 illustrates a functional view of the system database 130 that stores data related to the textbook content hosting system 110. The system database 130 may be divided based on the different types of data stored within. This data may reside in separate physical devices, or it may be collected within a single physical device.

With respect to content providers, partner data 370 comprises information regarding content providers, or partners, registered with the content hosting system 110 that have permission to create and deliver content. Partner data 370 includes provider contact information.

For providers creating paid textbooks, add-ons, or other content, partner data 370 contains billing and revenue sharing information for the provider. Some providers may create subscription channels while others may provide single payment or free delivery of electronic textbooks and related information. These providers may have specific agreements with the operator of the content hosting system 110 for how revenue will flow from the content hosting system 110 to the provider. These specific agreements are contained in the partner data 370.

Alternatively, some providers may not have specific agreements with the operator of the content hosting system 110 for how revenue will flow from the content hosting service 110 to the provider. For these providers, partner data 370 comprises a standardized set of information dictating how revenue will flow from the content hosting system 110 to the providers. For example, for a given partner, the partner data may indicate that the content hosting system 110 receives 25% of the revenue for an item provided to a user, and the content provider receives 75%. Of course, other more complex allocations can be used with variable factors based on features, user base, and the like.

User profile data storage 310 includes information about an individual user (e.g., a student), to facilitate the payment and collaborative aspects of system 100. Subscriber data storage 320 includes identifying information about the student, such as the electronic textbooks the student has obtained and the social network groups the user has joined. In some examples, subscriber data storage 320 also maintains information regarding where the student is in each of the student's textbooks to allow, for example, a student to read part of a textbook chapter on a smart phone while on a campus bus and continue reading from the same spot on the student's desktop computer in a dorm room. Subscriber data storage 320 contains, in some examples, data about the user that is not explicitly entered by the user, but which is tracked as the user navigates through textbooks and related materials. Subscriber viewing data includes, for example, user study habits, such as the total time spent by the subscriber per chapter, average time spent per week in a textbook, proportion of time spent on initial reading as opposed to problem-set activity and pre-test review, and the like. Such information is, in some examples, made available to the student to assist in tracking and improving study habits; in other embodiments, aggregated information is used to help determine how best to improve textbooks and related materials.

Account data storage 330 keeps track of the user's payment mechanisms (e.g., Google Inc.'s CHECKOUT^{®}) related to the user's ability to obtain content and add-ons from system 100.

Social network data storage 340 maintains the information needed to implement a social network engine to provide the collaborative features discussed herein, (e.g., social graphs, social network preferences and rules).

Textbook data 350 stores the actual content that is provided to users upon their request, such as electronic textbook files.

Add-on data storage 360 maintains information for related features, such as non-static data relating to textbooks (e.g., climatological data that could be used by students in connection with an environmental studies textbook). In some examples, separate storage is used for textbook data 350 and add-on data 360, while in other examples they are combined.

In one example, conventional mechanisms are used to implement many of the aspects of system database 130. For example, the existing mechanisms from Google Inc.'s BOOKS™ GMAIL™, BUZZ™ CHAT™, TALK™ ORKUT™, CHECKOUT™ YOUTUBE™, SCHOLAR™, BLOGS™, and other products include aspects that can help to implement one or more of storage facilities 310-370 and modules 220-270. Google Inc. already provides eBook readers for ANDROID™ devices (phones, tablets, etc.), iOS devices (iPhones®, iPads® and other devices from Apple, Inc.), and various desktop Web browsers, and in one example Google Inc.'s EDITIONS™ eBook reader application is modified to provide the functionality described herein.

As mentioned above, user profile data 310 is usable on a per-student basis and is also capable of being aggregated for various populations of subscribers. The population can be the entire subscriber population, or any selected subset thereof, such as targeted subscribers based on any combination of demographic or behavioral characteristics, or content selections. System-wide usage data includes trends and patterns in usage habits for any desired population. For example, correlations can be made between electronic textbooks and add-ons that students choose (presumably related in some way to those textbooks). In one example, when a user obtains a new textbook, such data are used to recommend other related items the user might also be interested in obtaining. Valuation of items, relative rankings of items, and other synthesized information can also be obtained from such data.

A content provider interface is used by a content provider to create and manage electronic textbooks and add-ons on the content hosting system 110. The content provider interface is transmitted to the content provider through the content provider front end server 150 and browser 182.

The content provider interface contains an overview interface (not shown) for providers to view when they log into the content hosting system 110 through the content provider front end server 150. The overview interface contains options for creating new materials, modifying existing materials, responding to user questions/suggestions, viewing system usage data, and viewing related data (e.g., which third party add-ons tend to be obtained by those who have gotten the electronic textbook). The overview interface further contains brief summaries of information about how the electronic textbook and add-ons are being received in the student population, as well as among professors and teaching assistants. Providers may customize which summaries are displayed.

An upload interface (not shown) allows a provider to upload material to be offered in the system. The upload interface allows the user to configure options regarding the details of the uploaded material including an indication of whether the material is free or what its cost is, and whether there are any restrictions on the nature of use of the work (e.g., free if used for distance learning, paid otherwise). The upload interface allows the configuration and upload of multiple items at the same time. The upload interface can upload items individually, or in bulk.

Referring now to FIG. 4, there is shown a portable computer 400 (e.g., a tablet computer running the ANDROID™ operating system) with a touch screen 401, a microphone 402, and a front-facing camera 403. As is known to those skilled in the art, such devices currently available typically also provide rear-facing cameras, accelerometers, GPS receivers, Wi-Fi and advanced cellular communications capabilities, and various other features. As shown, computer 400 is running reader module 181 and displaying a page 404 from an electronic textbook.

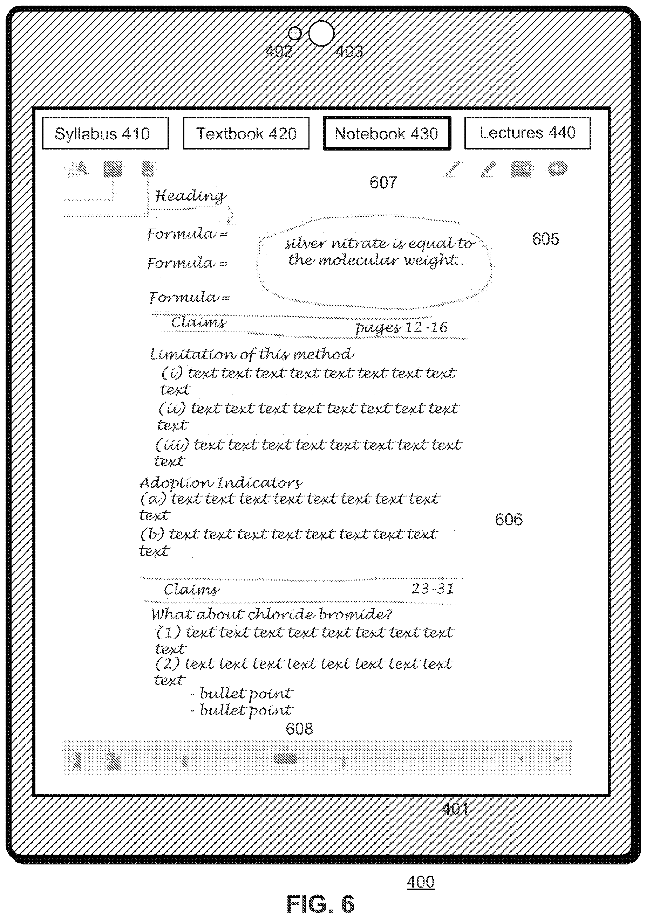

In one example, reader module 181 provides four tabs above a main content area 404 allowing selection of four class modules via the following user interface icons: a Syllabus tab 410, a Textbook tab 420, a Notebook tab 430 and a Lectures tab 440. The Syllabus tab 410 provides course-specific information for the student, including a calendar of what portions of the text are going to be dealt with on what dates, when assignments are due, and when tests are scheduled. In one example, the student's performance during the class is also tracked here (e.g., grades on assignments and exams to date). The Textbook tab 420, shown in FIG. 4 as the currently selected tab, provides the actual textbook, as well as a number of navigational and other tools related to view of the textbook. The Notebook tab 430, when selected, causes the student's notebook for the course to be displayed (see discussion of FIG. 6, below). The Lectures tab 440, when selected, causes display of lecture-related materials, such as a professor may choose to provide to students. For example, a professor may provide slide decks used in a lecture, videos, or other materials that repeat or supplement what the professor presents in a lecture session. In certain examples, various portions of such content are provided as add-ons, while in other examples, they are provided by default or along with the main electronic book with which they are associated.

More specifically, the display provided under the Textbook tab 420 includes a number of reading and annotation tools 407. First, the name of the currently selected textbook is displayed (in this instance, "Freshman Chemistry") in a drop-down menu allowing selection of alternate texts for courses that use multiple textbooks. Not shown are controls, in one example provided above tools 407, for various functions such as selecting among available courses, for purchasing textbooks and related items such as add-ons, for opening a chat as described below, for launching a search engine, for changing system settings, and for getting automated help.

To the right of the textbook title is an icon to display a table of contents, as well as an icon to change settings such as text size. To the right of that is an icon to toggle between regular view of the textbook and view of a user-generated study guide (discussed below). To the right of that is an eye-shaped icon, currently shown in the "eye shut" state, indicating whether to show user annotations (also detailed below). The last four icons are to add handwritten (pen) annotations (via a stylus or finger, as desired and as supported by computer 400), highlighting, sticky note annotations, and audio annotations to the textbook.

Below the primary content display area 404 are a set of page navigation tools 408. From left to right they include an icon to add a bookmark, an indicator of the current page (circle) in relation to various chapters (noted by breaks in the horizontal line) and previously set bookmarks, a number indicating the last page of the textbook, and arrows representing previous page and next page commands. The user touches on an appropriate portion of this display of tools 408 to accomplish a corresponding action.

Also shown on FIG. 4 is a large bar 405, in one example indicated by color (e.g., yellow). Bar 405 indicates that the user has created a sticky note relating to this portion of the text. Smaller bars, in one example displayed in gray, appear both within and below bar 405; in one embodiment, these represent other types of annotations provided by the student, for example an audio annotation or a video annotation. Likewise, vertical lines 406 indicate still other student input, in one example highlighting (straight lines) and handwritten annotations (squiggles). As noted above, the closed-eye icon in tools 407 indicates that all of this student-generated markup of the text is currently being hidden from view. In various examples, various combinations of the features detailed above are provided by default or as add-ons.

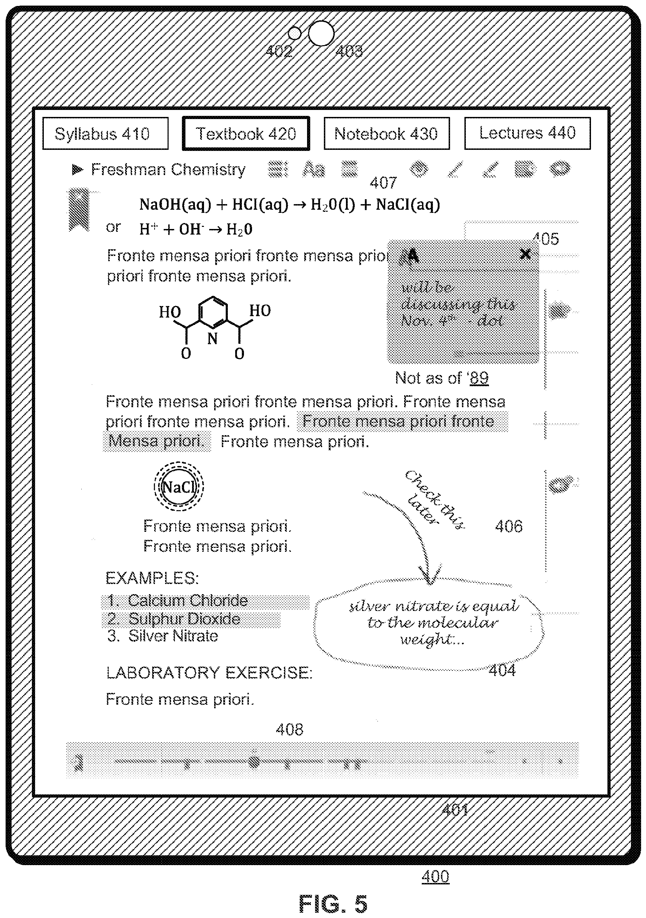

Referring now also to FIG. 5, the same tablet computer is shown, this time with the aforementioned eye icon in the open state (annotations displayed). The bar 405 now shows as a full sticky note, complete with a user control for settings (which in one example include an OCR option to convert the handwritten text to clean machine-searchable text and an option to toggle between handwritten and machine text versions for display). In one example, a small "resize handle" icon appears at the bottom of the note to allow the note to be made larger or smaller as the user may desire, and an "X" in the upper right-hand corner of the note allows the user to delete the note if desired. The small gray bars referenced above are replaced with a "TV" icon indicating a video annotation as well as a small green circle with a number in it indicating how many comments have been entered concerning this annotation (e.g., by other students in a collaborative study session). A similar loudspeaker icon with a small green circle and corresponding number indicates an audio annotation and comments on that. Likewise, the highlighting and handwritten text previously indicated by vertical lines is now fully displayed. Also in this display, an indication of the current bookmarked status of the page is included in the upper left-hand corner, along with an "X" which, when touched by the user, removes the bookmark.

In some examples, reader module 181 uses accelerometer and other positioning input from computer 400 and interprets certain movements as commands. As one example, tilting computer 400 from portrait mode (as shown in FIGS. 4 and 5) to landscape mode triggers a change in the display from one page to two-page spread format. An abrupt partial tilt, on the other hand, when in the "show annotations" mode illustrated in FIG. 5, causes the annotations to be "poured" into the margin and the display switched to the "hide annotations" (corresponding to "closed eye" icon) mode illustrated in FIG. 4. A tilt in the other direction pours the annotations back into view. Through application programming interfaces, these user interface elements are usable by add-ons as well.

Referring now to FIG. 6, the same user computer 400 is now shown after the user has selected the Notebook tab 430. In this mode of operation, in addition to the in-textbook annotations described above, a student can readily create and maintain a notebook keyed to specific portions of a textbook or lecture. A set of tools 607 provides icons that (from left to right) allow a student to change settings, such as displaying hand-entered text as shown here or a machine-recognized typed version of the same; to capture information from a whiteboard or chalkboard using camera 403 or (if equipped) a back-facing camera on computer 400; to share notes with others, to enter notes with a pen tool as described above, to highlight notes, to add a sticky note to the notebook, and to capture audio annotations corresponding to the notes from microphone 402. In one example, the student can provide not only handwriting, but hand-drawn shapes 605 as well in both the notebook and textbook annotation modes of operation. Likewise, the student can provide notes in outline form 606. As detailed below, in another example, recognition of such handwritten material includes conversion of casual hand-drawn lines, boxes, ovals, and other shapes into cleaner geometric graphics and organization of outlined material into an actual typed outline. The page navigation tools 608 in the notebook mode of operations include icons (from left to right) to add a bookmark, add a new page to the notebook, and navigate among the pages of the notebook as previously explained in connection with textbook page navigation.

Paper textbooks are limited in the manner in which a person may augment a book with additional material. However, with electronic books, third parties can not only provide "work-along" materials, but can directly augment material from within the electronic textbook itself. Reader 181 is configured to provide such additional functionality. Consider, for example, the chemical reactions and molecular diagrams shown in FIG. 4. In one example, these illustrations are tagged such that a third party can provide a corresponding application that "reads" such a reaction or diagram and provides corresponding functionality to assist in learning. One example of such corresponding functionality is an animation, showing how a reaction actually takes place (e.g., showing old chemical bonds breaking and new chemical bonds forming, with corresponding energy input or output). Likewise, videos of what the reactions actually look like in the laboratory can be provided.

In one example, an add-on provides an animation of two beakers filled with chemical solutions of certain quantities, temperatures, etc., related to corresponding material from a portion of a textbook that the student is reading. The initial image suggests that the experiment will mix the chemicals, heat them in a flask with a Bunsen burner, and capture/condense a gas that is released. Icons with question marks act as prompts to students to determine, for example, a quantity of condensed material obtained and what the material is. When the student selects a "Run Experiment" button, the animation shows what would happen in the real experiment and the question marks are replaced with the correct results, allowing students to see if their understanding of the chemistry is reflected by the actual results. In a related example, icons representing lab equipment and compounds are selected and arranged by a student for self-designed experiments. In this example, additional assistance to the student is provided by allowing expansion of information relating to each item selected, for instance, when a chemical compound is selected by its formula, selection of the icon allows display of its molecular diagram and allows the student to use a slider to adjust volume of the material to be used in the experiment (e.g., increasing from 100 to 250 ml). Once the simulated experiment is run by the add-on, the student can compare results with corresponding result information from the textbook.

As still another example, an add-on can allow students to manipulate molecules, ions, etc. in the molecular diagram in a manner that allows valid chemical bonds to "snap" into place and that leaves invalid chemical bonds shown as unformed, perhaps with a reason given why the attempted chemical bond is not working.

System 100 provides a marketplace for such third party modules 120 to be uploaded by content providers and made available to users, in the same way as the textbooks themselves are. Third party providers include, in various examples, large traditional publishers, independent publishers, free sources, and sources providing content under Creative Commons licenses, teachers, students themselves (e.g., as part of a class assignment), and the public. Examples of such add-ons include interactive visualizations (such as the molecular manipulations mentioned above), educational videos relating to the subject matter of a text section, distance tutors and remote teaching assistants, simulations (e.g., circuit simulators), virtual devices (e.g., a virtual digital voltmeter for checking voltages at various points in a schematic diagram), and educational applications related to the subject of a text portion (e.g., a sheet music synthesizer application).

Because the type of add-on should not be limited or constrained by existing platforms or technologies, in one example, many of the components of system 100 are implemented as open platform resources, such that third parties can extend and modify them as needed to generate new types of functionality.

In one example, reader 181 is configured to support four types of add-ons. The first is a user application; upon installation a user interface places an icon representing the application in the margin of the text (e.g., the same way that the student's annotations are placed in the margin). When the student wishes to invoke the application, it can be pulled out like a desk drawer from the margin and brought to part- or full-screen display. From an architectural perspective, these applications are either natively operating on device 400 or hosted, for instance by a developer server in communication with user computer 180A via network 170.

A second type of application is a daemon application that runs in the background without any visible indication that it is running. In one example, a daemon subsystem 270 of reader module 181 manages operation of such daemons. Examples of such daemon applications for a music theory textbook include musical character recognition, melody recognition, and music synthesis. One example supports implementing such applications as JAVA™ applications running in an ANDROID™ "sandbox." As one specific example, an application might simply provide a "speaker" icon adjacent to a musical score excerpt (either in a persistent manner or when the user taps on the score) and recognize and play an audible melody in response to the user's command (e.g., by a double-tap on that section or a tap on the speaker icon). As another example, hovering over a portion of text with an equation or a table of numbers (e.g., in a finance textbook) automatically brings up a calculator add-on, with one option including contextual awareness to automatically insert a number from a table into the calculator.

A third type of add-on is an additional coursebook tab, presented the same way as, for instance, the "Lectures" tab 440 in FIG. 4. In one example, such tabs provide links to website material corresponding to the current portion of the text; in another example they provide links to locally stored material that is likewise related (e.g., a periodic table of elements). While this material in many examples is directly related to the subject matter of a book per se, such add-ons in other examples also include material intended to make presentation of textbook material less "dry" for students, such as a whimsical video clip of a person, along with his butler, about to enjoy a meat pie dinner in a mansion as a means to explain something in a chemistry textbook about how molecules react when heated.

A fourth type of add-on provides extensions to the collaborative features provided by collaboration subsystem 240. As one example, a transcription application creates a text transcript from an audio track of a video chat among students, so that a student who did not fully understand what was being explained has a chance to review the discussion at a later time. The transcription is done in near real-time and appears in the collaboration user interface so that the students are assured that the content is being captured in an adequate and usable manner. As another example, a study group "facilitator" app provides study questions and practice exams that the students in a chat can discuss and then select answers for; the app provides explanations related to each question. As still another example, for international students, a real-time translator application translates text (or audio, or text derived from audio) into and from the students' native language to assist in their participation in a study group.

Still further examples of such collaboration-related add-ons include moderator applications to help keep study groups on time and on task; Q&A applications that allow students to ask questions, to see questions asked by others (and corresponding answers), or that call upon random members of the group to suggest answers; applications that present short quizzes to the study group from time to time, again to ensure that the group is staying focused on the task at hand, and helping to set further questions based on the level of understanding evident from how the group is performing. In some examples, social network tools such as user voting (up or down) on importance of questions, placing most popular items higher than others and emphasizing answers selected or provided by a certain person (e.g., the course professor), showing/hiding metadata (e.g., corresponding textbook pages, questioner or answerer profile page, search link pre-loaded with the question), student ranking of the helpfulness of answers and the like are supported to further enhance the value of the add-on. In one specific example, add-on quizzes are implemented with an enjoyable student experience in mind; for example, percentage of correct answers is displayed for reference, but placed at the bottom of the display and not over-emphasized to keep the focus on learning and reduce anxiety. Learning is also enhanced by providing with the answers both an explanation of the answers as well as a link to further questions on specific listed and related topics so that students unsure of their understanding about a particular topic can keep testing themselves in related areas. In one specific example, selecting a specific related topic acts to weight further quiz questions toward that topic, rather than merely quizzing directly on that topic.

Yet another example of an add-on allows a student to engage in a real-time collaborative tutoring session, either on a paid basis (e.g., $X for fifteen minutes) or otherwise. The tutor is automatically informed of the portion of the textbook the student was looking at when signing up for the session (suggesting what subject matter prompted the need for tutoring). In some examples, the tutoring is by a video chat window at the bottom of the screen; in others, it is by text chat. In one specific example, the audio of a video chat is automatically converted into a real time transcript to allow the student to look back on a point that may remain unclear after the tutor first presents it. Furthermore, the transcript includes tabs allowing the student to choose to view the transcript in more than one language (e.g., in the language the course is being taught in or the student's own language; in the student's own language or as translated to a language being taught in the course). A timer indication allows the student to know how much tutoring time remains in a session, and for video chats, automatic real-time closed captioning allows a student to see text corresponding to what the tutor is saying (regardless of whether a corresponding text chat is also being displayed). As tutoring time is coming close to running out, the time is displayed in red and a pop-up window allows the student to purchase, for example, more tutoring time in additional blocks of 15, 30, or 60 minutes (filtered by the tutor's availability), each with corresponding costs displayed. In one example, these collaborative applications are implemented as JAVASCRIPT™ widgets.

As discussed above, applications can be obtained by students through the same "marketplace" interface by which they obtain textbooks. In some examples they are automatically pushed to students as they are created (e.g., for add-ons created by their teacher). Reader 181 permits each type of add-on to be presented to students in various ways (e.g., tabs, icon "bugs" and the like) as may be most appropriate for the environment of their use.

Given the wide potential uses for third party add-ons, system 100 provides a number of mechanisms for launching such add-ons, one of which may be more appropriate than another in a particular circumstance or environment. First, a user can launch an add-on through a pull-down menu; such a menu includes, in one example, all add-ons that the user has downloaded (whether purchased or free), as well as any add-ons that an instructor may have downloaded on behalf of a class. In the latter case, user interface options permit the instructor to select a class section to automatically designate recipients of the add-on, or to manually enter or upload a list of student email addresses. In some examples, instructors are provided further control, such as prohibiting certain add-ons for a given course during a given semester (for example, to prevent students from readily obtaining "short-cuts" to answers that might inhibit their learning). For paid add-ons, in typical environments, single-student cost for an add-on is less than the cost to provide add-ons to an entire class.

In one examples, upon installation, an add-on manifests a new tab on a user's tab-based user interface. User selection of the tab launches the add-on. In a related example, upon installation, an add-on places an icon at an appropriate place on the user's electronic reader device (e.g., at an upper right corner for an add-on applicable to the entirety of a book or next to a portion of sheet music for an add-on applicable only to a portion of the book).

Still another example of a manner of implementing an add-on is via a triggered launch, in which the add-on is automatically triggered upon a specific condition, such as navigation onto a particular page number of a book, or rendering of a designated illustration. For example, an add-on that provides 3-D rotatable molecular views is triggered whenever a traditional 2-D illustration of a molecule is rendered.

To make operation of add-ons more flexible and beneficial to the user, in one embodiment, add-ons are configured to be aware of initial conditions and other launch parameters as follows. In one example, by default an add-on receives a graphical snapshot (e.g., PNG) of the entire page being displayed to the user as a launch parameter. Depending on the nature of the add-on, the information on that page is deciphered to determine an initial condition for the operation of the add-on (e.g., an intention of the user). For example, if a musical passage is shown and the text of the page references trumpet, a synthesized version of the passage is played with a synthesizer configured for a trumpet voice.

More specific initial conditions are configurable for add-ons that are manually annotated within a book. For example, an annotator in one example specifies a bounding rectangle of a page (e.g., encapsulating a graphic) that represents the precise parameter or initial condition of the add-on. In this manner, an illustration of a specific molecule (e.g., CO₂) not only permits launching of a 3-D molecule viewing add-on, but launches that add-on with that particular molecule as its initial condition.

A related initial condition process examines text rather than images. Consider an example in which an add-on provides "family tree" information regarding characters in novels or non-fiction histories/biographies. In this instance, if an add-on is launched on a page containing a character name, the initial condition is set such that the character(s) referenced are the ones that initially appear in the application. Thus, a reader of "Gone with the Wind" who has obtained an add-on to provide character information might, upon launching the add-on, see a family tree centered on Rhett Butler if that character's name was on the page the reader was viewing at the time the reader instantiates the add-on. In one specific example, the add-on provides a "family tree" tab and a "social relationships" tab to allow more information to be gained about a character. To further assist the reader, by directing attention to a particular person on the family tree or social relationships graph, either by hovering over that person or by clicking on that person's name, a short biography of the person, links to pages in the book referencing that person (in some examples with short contextual notes for each page reference, such as, "first sees Scarlett O'Hara") and, if appropriate, an illustration of that person is provided, along with a link for still further detailed information about that person. Should more information be available by not centering a family tree on a selected character (for instance when a child is selected so that there are no later-generation members), the tree is illustrated in a manner that shows the greatest amount of information (such as placing the character at the bottom of the add-on's display, so as to be able to display parents, grandparents, aunts and uncles above the character). In some examples, a user may navigate through a family tree or social relationship graph by pressing and dragging a portion of the display toward the display center.

Books, including electronic books, routinely include a bibliographies, whether for the entire book or on a chapter-by-chapter basis, as well as in-line references to external works. For electronic textbooks that do not natively provide links to such sources, OCR subsystem 230 of reader module 181 automatically recognizes patterns indicative of such references, and searches for links to digital versions of these other works. In one example, such links are analogous to web hyperlinks, but instead are specialized links that point directly to versions of such other works that are in a form most usable with reader module 181. For example, a link might launch a browser and point it to a book in Google Inc.'s BOOKS™, Google Inc.'s EBOOKSTORE™, AMAZON.COM^{®}, or other appropriate source. In another instance, a link points directly to an add-on in a marketplace, a scholarly article in Google Inc.'s
SCHOLAR™ facility, or a patent in Google Inc.'s PATENTS™ facility, as appropriate. The student is provided, by reader module 181, the ability to access such sources merely by tapping or clicking on the text book portion corresponding to that link. In some cases, the external sources may be free (e.g., works for which copyright has expired) and the student is then shown the link immediately. In other instances, the student is brought to the appropriate vendor store site from which a digital version of the reference may be purchased. Not only other books and journal articles, but patents and other public documents such as court decisions and filings with the Securities and Exchange Commission are made available to students in an extremely efficient manner by such links. In one example, paid content providers offer payment (e.g., a "reward") to the textbook author, the operator of hosting system 110, or other related parties for purchases facilitated by these links.

In recent years, professors have begun offering more and more interdisciplinary courses. Unfortunately, for many students this has required purchase of multiple textbooks in disparate areas, even though only one small portion might be used from some of those books.

Content provider front end server 150 is configured to permit a content provider to order only a portion of an electronic textbook. In one example, content provider front end server 150 is hosted along with the other components of textbook hosting content system 110; in another example some portion of the functionality of content provider front end server 150 is hosted on servers operated by various publishers, accessible via a web site or client application, to make works available to instructors, students, and automated systems such as textbook content hosting system 110.

In one example, content provider front end server 150 specifies which titles must be purchased as an entire unit and which are provided in an "unbundled manner" such that instructors (and in some cases students directly) can choose select components only, such as individual chapters. In one example, the components include add-ons that are available separately as well as one of the integrated components of a custom book. Likewise, content provider front end server also specifies other information pertinent to use of components: a pricing model (buy-sell model with suggested retail price and fixed revenue share percentage with discounting possible or agency model with negotiated revenue share in which publisher is the seller and retailer collects taxes on behalf of the publisher); a revenue model (purchase, in which the user owns the title; perpetual license; rental; or subscription); and pricing parameters (wholesale/retail prices, monthly fees/license/subscription rates). In one example, allowable or prohibited combinations are also specified, such as a publisher may specify that any selection of chapter 7 requires chapters 9-14 as well, or a publisher may specify that components may be used except in combination with a rival publisher's textbook. More complicated combinations are supported as well, such as requiring that a certain chapter appear before another chapter in a custom-designed coursebook, for instance as may be detailed in a directed acyclic graph of dependencies. In certain environments where other specifications are appropriate, they are also supported, e.g., limitations on number of concurrent users (in one particular example separating online from offline users with separate limits for each); permissible geographic limitations for purchase or use; and limitations on whether the title may be purchased, rented, subscribed, or loaned.

Content provider computer 180B is configured to allow an instructor to select less than a complete textbook, and to combine various textbooks and other sources together (e.g., case studies, web pages, journals, magazines). Using content provider computer 180B, the instructor selects, orders and arranges the components as desired to match with a syllabus, provides a title and any other desired information for this material, and then textbook content hosting system 110 generates a new, instructor-curated digital textbook based on the instructor's input. The instructor is also provided an interface for specifying text and layout of a cover page, including book title, instructor, academic institution, quarter or semester, year, course, and section.

The instructor is provided with a number of search, browse, automatic recommendation, and prompt tools to add and organize content. Searching and browsing are made available based on book title, chapter title, keyword, author, genre, or other appropriate factors. Browser 182 is configured to indicate to the instructor which choices are valid and which are not based on publisher rules and system settings. The instructor can specify not only textbook portions, but academic journal articles, web pages or dynamic web applications, and other material for inclusion in the course book. The instructor also specifies the order of these components and whether to add a table of contents, as well as whether to add an index. If a table of contents or index are desired, they are automatically created. The instructor can further specify whether the coursebook is to be published in color or black & white (where the source material permits). The instructor also specifies whether to serially number all of the pages in the new coursebook (replacing any original page numbering of the components) or merely rely on any internal numbering of the components.

The instructor is also provided an option to normalize style elements across all components, (i.e., reformat components as much as possible to produce a cohesive book with unified styling). For example, typeface, font size, and margins can be made consistent by choosing a predominant style found in the majority of components. In some instances, where source materials are primarily in flexible formatting (e.g., XML), an instructor-specified style (or in the absence of one, a default style) is applied to the components.

The new book is then synthesized by reformatting the components, reordering the components, adding any specified table of contents or index, concatenating the components into a single work, adding a cover sheet, creating a digital file suitable for use via reader module 181 (for example PDF or EPUB), and arranging for issue of a new ISBM to identify the work.

In addition, synthesis of the book also includes reconciling all restrictions, limitations, and requirements of the components and synthesizing therefrom an umbrella policy covering the book. For example, if only one of three chapters in a book is subject to a geographic limitation (e.g., licensed for use in California only), then the entire book is made subject to that limitation. In one example, such policy information is stored in a policy database (not shown).

In one example, a rights management subsystem (not shown) of textbook content hosting system 110 clears the needed legal rights for the selected sources, generates an aggregate price for the textbook based on the component prices, and offers the textbook in same manner as a complete publisher-sourced electronic textbook (as described above).

When a student purchases such a textbook using ordering subsystem 250 of reader module 181, textbook content hosting system 110 collects the payment, calculates the royalty due to each publisher or other rights holder, and makes the corresponding payments.

The same components that permit rights management and establish policies for synthesizing custom course packs also permit publishers (both the book publishers and the add-on publishers) as well as other relevant participants (e.g., course instructors) to set policies, establish constraints, and otherwise manage the manner in which add-ons may be downloaded and executed.

In one example, these participants specify allowed or prohibited details for add-ons, including: hardware/operating system platforms (e.g., iOS, ANDROID™, MOTOROLA ZOOM™); geographic territories for downloading or running; which e-books, add-ons, publishers, and developers are or are not allowable for a particular add-on or e-book; express indication that an add-on has been tested, approved, recommended, or supported by a publisher, platform operator or other relevant party; allowability of utilization online v. offline; maximum number of unique devices on which the add-on may be downloaded; maximum number of connected devices that can use the add-on concurrently; and manner of distribution for the add-on (e.g., direct download/installation through official store only v. "side loaded" distribution directly to a user, for instance from a course instructor).

Implementation of add-ons as described herein is accomplished in one example using application programming interfaces (APIs) to permit add-ons to access, and communicate with, various system components and related information/services. For purposes of selling or otherwise providing add-ons, in one example this includes information regarding marketing/publication such as having an add-on appear in a store in a manner such as a corresponding e-book appears; policy/permission information as discussed above; pricing information for add-ons that are not free, again as discussed above regarding books; merchandising attributes for use in an add-ons marketplace (e.g., artwork and summary descriptive information); statistics and related information regarding download and usage transactions; information regarding payments.

Likewise, various interactions are used between an add-on and a corresponding e-reader device (as well as other systems the device may communicate with) in connection with running the add-on. In order to implement the permissions and policies discussed above, the interactions include in various examples reading attributes of the current book in which the add-on is running (e.g., ISBN, title, author, genre, price); initial launch conditions discussed above, such as a current page graphic or bounding rectangle; read/write services (e.g., optical recognition to "read" sheet music and audio streaming to play the corresponding audio) as well as related audio/video/text chat and collaboration information; and UI interactions, such as adding, removing, and titling a tab, icon, or window.

Textbook content hosting system 110 publishes a new textbook (or related material such as a new add-on) by, in addition to determining prices/conditions as specified above, making digital versions available in electronic eTextbook stores, such as may be provided by Google Inc.'s EBOOKSTORE™ or at AMAZON.COM^{®}. In one example, a separate instructor-curated textbook database (not shown) is used to store such newly authored textbooks and a separate add-ons database is used to store add-ons. In another example, hardcopies of the book are printed and made available at one or more traditional bookstores, such as a campus bookstore or national retailer.

As previously mentioned, one of the benefits of using electronic textbooks is that various types of usage data, such as which sections are most frequently annotated, can be aggregated and used to improve future editions of a textbook. In addition, aggregated data are used in some examples to determine compensation for a publisher's sales force, so that sales personnel responsible for schools or geographies with strong sales and usage are rewarded for successfully promoting the book.

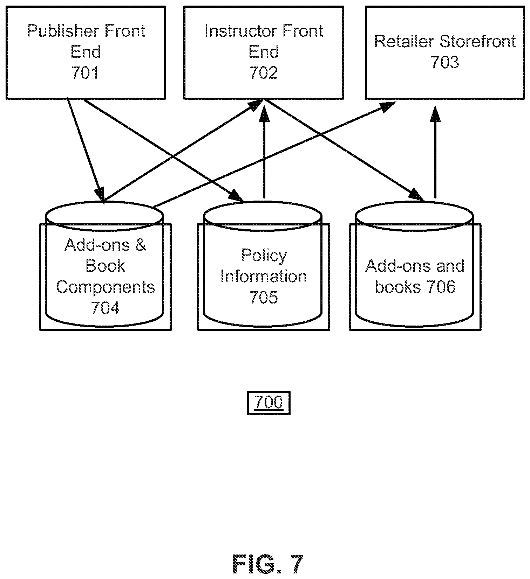

For purposes of discussion, those of the various components described above that are pertinent to creation and distribution of customized textbooks and book add-ons are illustrated in FIG. 7 as system 700. System 700 includes a publisher front end 701, a third party (e.g., instructor) front end 702, a retailer storefront 703, an add-ons and book components database 704, a policy information database 705, and an add-ons and books database 706. In some examples, front ends 701, 702, and storefront 703 are implemented using websites; in other examples, they are implemented using software applications, websites, or combinations thereof. Note that while system 700 is described herein as supporting both custom creation of textbooks as well as add-ons for electronic books, system 700 in some examples only provides add-ons.

Publisher front end 701 provides a facility by which publishers can upload book content and set allowable parameters for its use as described above. For example, a user interface allows a publisher to specify which titles can be used with add-ons (and in some embodiments, which add-ons are allowed or prohibited), which titles are "unbundled", which pricing models are applicable to each work (e.g., buy-sell or agency), which revenue models are applicable (e.g., provision of a copy by ownership or license, rental, subscription), what pricing parameters will be used, what combinations of components are permitted and in what order, and constraints on usage of material (e.g., number of users permitted, geographic territories in which the title may be purchased or consumed). The book content specified by publisher front end 701 is stored in add-ons and book components database 704, and the parameters and other related information are stored in policy information database 705.

Third party front end 702 provides a facility by which professors, for example, can create add-ons or create custom books (e.g., by including components from various sources). For example, a user interface allows working with application programming interfaces that specify which portions of a book are accessible and how they may be referenced for any particular add-on. For creation of custom books, such interface supports browsing and selecting components based on author, title (book or chapter), keyword, or genre. In addition, recommendations are provided for user selection. In some examples, the recommendations are based on the user's prior history in selecting titles; in others, they are based on subject matter, level (e.g., introductory v. advanced), publisher, geography (e.g., U.S. v. Canadian usage), or combinations of such factors. Not only electronic books, but other content such as add-ons, web pages, or dynamic web applications can also be selected for inclusion. In addition to selecting components, third party front end 702 prompts the user to specify user interface details for add-ons, and for custom books text and layout for a cover page (e.g., book title, instructor, academic institution, quarter/semester, year, course name/number, section name/number). Further, front end 702 prompts the user to specify an order for the components, a table of contents, an index, pagination, and formatting (e.g., uniform typeface and other normalized parameters, color or b/w presentation). It is anticipated that a great deal of available works will be made available in a manner in which content and formatting instructions are independent (e.g., XML), so that a cohesive book with unified styling can be created even from very disparate components. In one example, if flexible formatting is not permitted, for instance due to publisher requirements in the policy information database, front end 702 suggests use of a typeface for other components (e.g., cover page, table of contents) in a corresponding form (typeface, font size, margins and the like) to provide an aesthetically pleasing end product.

Thus, front end 702 calls upon information from both add-ons and book components database 704 and policy information database 705 for a proposed new add-on or book. Should there be any incompatibilities between what is requested and what is available or permitted, front end 702 provides suggested solutions (e.g., text on similar subject from alternative publisher, addition of required chapter).

Once all requirements are met, system 700 creates the new add-on or book by reformatting and reordering the various components, adding any specified table of contents, index and pagination, concatenating all of the components into a single work, adding any specified cover sheet, and creating a digital file representation of the new book, for instance in PDF or EPUB format. In addition, system 700 is configured in some examples to facilitate issuance of a new ISBN for the new work, if appropriate.

Aside from the production, system 700 further reconciles all of the policy information relating to the selected components and synthesizes therefrom a new umbrella policy that will cover the work. In one example, the new policy is synthesized to be no less restrictive than the policies associated with any particular component. Thus, the author of the add-on specifies a geographical limitation (e.g., use in California only), the use of the add-on in connection with a book will have the same geographical limitation.

Once the add-on or custom book is synthesized, system 700 provides processing to support its publication, including determining a price for it. For add-ons, this is done via a user interface prompt to the author, in some examples along with suggestions (e.g., examples of other similar add-ons that may be purchased for use with the same book or books); for custom books this is done in one example by computing the retail price of each component, applying any rules for combination as may apply to that component, summing the component prices, and adding any applicable service fee or margin.

System 700 publishes the add-on or custom book by placing the work in the add-ons database 706, and populating information about the work in retailer storefront 703. In one example, retailer storefront 703 is an electronic book store, such as those provided by Amazon.com and Google, permitting a user to instantly download the add-on from storefront 703. In one example, a user is provided a listing of add-ons along with the textbook, and can choose to obtain (via purchase, rental, or otherwise) one or more of those add-ons, or to ask to obtain all of them at once. In another example applicable particularly to customized books created using system 700, storefront 703 also includes facilities for providing the book through traditional physical bookstores, such as those operated by Barnes & Noble or traditional campus bookstores, in which case the books are printed and bound for purchasers. In some examples, retailer storefront 703 accesses add-ons that are not integrated into customized books and that do not have policies governing their use directly from add-ons & book components database 704, as shown by the dashed line in FIG. 7. In other examples, add-ons are stored separately, e.g., as shown in FIG. 3 (add-on data 360).

Storefront 703 provides a mechanism for obtaining payment from the retailers, which system 700 reconciles for payment to contributing publishers. Specifically, payment is collected, payments due to each publisher are aggregated (in one example for all electronic textbooks sold, rather on a per-title basis), and the aggregate payment is disbursed to the publisher on a regular basis (e.g., monthly), along with an accounting of the number of each component or add-on sold. In one example statistics such as number of each component sold by day, by venue is also provided.

As noted above, while the discussion here has been focused on a tablet computer (likely with stylus support to assist with handwritten note-taking), electronic textbook readers may likewise be implemented on other devices, such as laptop computers with touch screen support, smartphones, dedicated book reader devices, desktop computers, and the like.

Some portions of above description describe the embodiments in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs executed by a processor, equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the invention. This description should be read to include one or at least one and the singular also includes the plural unless it is obvious that it is meant otherwise.

Upon reading this disclosure, those of skill in the art will appreciate still additional alternative structural and functional designs for a system and a process for providing electronic textbooks using a content hosting system through the disclosed principles herein. Thus, while particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation, and details of the method and apparatus disclosed herein.

## Claims

1. An electronic book system, comprising:
a publisher processing subsystem configured to permit first publisher supply of an electronic book, and second publisher supply of an extension, the extension comprising a runnable add-on which is implemented via a triggered launch and which provides functionality relating to the book;
a distribution subsystem configured to provide the extension to a user of the electronic book system for use with an electronic book reader; and
an annotation subsystem, operably coupled with the electronic book reader, configured to add the extension to the book as an annotation, wherein a launch parameter for determining an initial condition of the add-on is responsive to a displayed portion of the book.

2. The electronic book system of claim 1, wherein the publisher processing subsystem is further configured to permit first publisher supply of one or more book policies, wherein at least one of the book policies specifies a manner in which the book may be used in combination with the extension, and/or wherein the publisher processing subsystem is further configured to permit second publisher supply of one or more extension policies, wherein at least one of the extension policies specifies a manner in which the book may be used in combination with the extension.

3. The electronic book system of claim 1, wherein the annotation subsystem is configured to present a user interface on the electronic book reader corresponding to use of the extension with the book.

4. The electronic book system of claim 1, wherein the extension is configured for automatic operation upon user attention to a portion of the book, and/or wherein the extension is configured to automatically present a user interface at a location in the book corresponding to use of the extension.

5. The electronic book system of claim 1, wherein the launch parameter of the extension is a graphical snapshot of the displayed portion of the book, and information in the graphical snapshot is deciphered to determine an initial condition for operation of the extension.

6. The electronic book system of claim 1, wherein the electronic book system is configured to provide an application programming interface for communication with the extension.

7. A computer-implemented method of providing an extension for an electronic book, the extension comprising a runnable add-on which is implemented via a triggered launch and which provides functionality relating to the book, the method comprising: selecting the extension for operation with the electronic book;
retrieving the extension from a database; and
associating the extension for use with the book as an annotation added to the book, wherein a launch parameter for determining an initial condition of the add-on is responsive to a displayed portion of the electronic book.

8. The method of claim 7, further comprising retrieving one or more book policies corresponding to the electronic book from a policy database, wherein at least one of the book policies specifies a manner in which the electronic book may be used in combination with the extension.

9. The method of claim 7, further comprising retrieving one or more extension policies corresponding to the extension from a policy database, wherein at least one of the extension policies specifies a manner in which the electronic book may be used in combination with the extension.

10. The method of claim 7, wherein associating the extension includes annotating the electronic book with the extension and/or wherein associating the extension includes presenting a user interface on the electronic book corresponding to use of the extension with the electronic book.

11. The method of claim 7, further comprising automatically initiating operation of the extension responsive to user attention to a portion of the electronic book.

12. The method of claim 7, further comprising providing a user interface at a location in the electronic book corresponding to use of the extension.

13. The method of claim 7, wherein the launch parameter is a graphical snapshot of the portion of the electronic book, the method further comprising deciphering information in the graphical snapshot to determine an initial condition for operation of the extension.

14. The method of claim 7, further comprising communicating information relating to the electronic book via an application programming interface with the extension.

15. A non-transitory computer-readable storage medium containing executable computer program instructions for causing a computer to perform a method in accordance with any one of claims 7 to 14.

## Patentansprüche

1. Elektronisches Buchsystem, umfassend:
ein Bearbeitungsteilsystem für Verleger, das so konfiguriert ist, dass es einem ersten Verleger ermöglicht, ein elektronisches Buch zu liefern, und einem zweiten Verleger, eine Erweiterung zu liefern, wobei die Erweiterung ein ausführbares Add-on umfasst, das über einen ausgelösten Start implementiert wird und das Funktionalität in Verbindung mit dem Buch bereitstellt;
ein Verteilungsteilsystem, das so konfiguriert ist, dass es die Erweiterung einem Benutzer des elektronischen Buchsystems für die Verwendung mit einem E-Book-Reader bereitstellt; und
ein Anmerkungsteilsystem, das operativ mit dem E-Book-Reader gekoppelt und so konfiguriert ist, dass es die Erweiterung zum Buch als Anmerkung hinzufügt, wobei ein Startparameter für die Ermittlung einer Anfangsbedingung des Add-ons auf einen angezeigten Teil des Buches reagiert.

2. Elektronisches Buchsystem nach Anspruch 1, wobei das Bearbeitungsteilsystem für Verleger des Weiteren so konfiguriert ist, dass es einem ersten Verleger die Lieferung von einer oder mehreren Buchrichtlinien erlaubt, wobei mindestens eine der Buchrichtlinien eine Weise angibt, in der das Buch in Kombination mit der Erweiterung verwendet werden kann, und/oder wobei das Bearbeitungsteilsystem für Verleger des Weiteren so konfiguriert ist, dass es einem zweiten Verleger die Lieferung von einer oder mehreren Erweiterungsrichtlinien erlaubt, wobei die mindestens eine der Erweiterungsrichtlinien eine Weise angibt, in der das Buch in Kombination mit der Erweiterung verwendet werden kann.

3. Elektronisches Buchsystem nach Anspruch 1, wobei das Anmerkungsteilsystem so konfiguriert ist, dass es eine Benutzeroberfläche auf dem E-Book-Reader darstellt, die der Verwendung der Erweiterung mit dem Buch entspricht.

4. Elektronisches Buchsystem nach Anspruch 1, wobei die Erweiterung für den automatischen Betrieb nach Betrachtung eines Teils des Buchs durch den Benutzer konfiguriert ist, und/oder wobei die Erweiterung so konfiguriert ist, dass sie automatisch eine Benutzeroberfläche an einem Ort im Buch darstellt, die der Verwendung der Erweiterung entspricht.

5. Elektronisches Buchsystem nach Anspruch 1, wobei der Startparameter der Erweiterung ein grafischer Schnappschuss des angezeigten Teils des Buches ist und Informationen im grafischen Schnappschuss entziffert werden, um eine Anfangsbedingungen für den Betrieb der Erweiterung zu ermitteln.

6. Elektronisches Buchsystem nach Anspruch 1, wobei das elektronische Buchsystem so konfiguriert ist, dass es eine Anwendungsprogrammierschnittstelle für die Kommunikation mit der Erweiterung bereitstellt.

7. Computerimplementiertes Verfahren der Bereitstellung einer Erweiterung für ein elektronisches Buch, wobei die Erweiterung ein ausführbares Add-on umfasst, das über einen ausgelösten Start implementiert wird und das Funktionalität in Verbindung mit dem Buch bereitstellt, das Verfahren umfassend: Auswählen der Erweiterung für den Betrieb mit dem elektronischen Buch; Abrufen der Erweiterung aus einer Datenbank; und
Verbinden der Erweiterung für die Verwendung mit dem Buch als Anmerkung, die zum Buch hinzugefügt wird, wobei ein Startparameter für die Ermittlung einer Anfangsbedingung des Add-ons auf einen angezeigten Teil des elektronischen Buchs reagiert.

8. Verfahren nach Anspruch 7, des Weiteren umfassend das Abrufen von einer oder mehreren Buchrichtlinien, die dem elektronischen Buch entsprechen, aus einer Richtliniendatenbank, wobei mindestens eine der Buchrichtlinien eine Weise angibt, in der das elektronische Buch in Kombination mit der Erweiterung verwendet werden kann.

9. Verfahren nach Anspruch 7, des Weiteren umfassend das Abrufen von einer oder mehreren Erweiterungsrichtlinien, die der Erweiterung entsprechen, aus einer Richtliniendatenbank, wobei mindestens eine der Erweiterungsrichtlinien eine Weise angibt, in der das elektronische Buch in Kombination mit der Erweiterung verwendet werden kann.

10. Verfahren nach Anspruch 7, wobei das Verbinden der Erweiterung das Versehen des elektronischen Buchs mit Anmerkungen der Erweiterung beinhaltet und/oder wobei das Versehen der Erweiterung mit Anmerkungen das Darstellen einer Benutzeroberfläche auf dem elektronischen Buch beinhaltet, die der Verwendung der Erweiterung mit dem elektronischen Buch entspricht.

11. Verfahren nach Anspruch 7, des Weiteren umfassend das automatische Initiieren der Erweiterung als Reaktion auf das Betrachten eines Teils des elektronischen Buchs durch den Benutzer.

12. Verfahren nach Anspruch 7, des Weiteren umfassend das Bereitstellen einer Benutzeroberfläche an einem Ort im elektronischen Buch, der der Verwendung der Erweiterung entspricht.

13. Verfahren nach Anspruch 7, wobei der Startparameter ein grafischer Schnappschuss des Teils des elektronischen Buches ist, das Verfahren des Weiteren umfassend das Entziffern von Informationen im grafischen Schnappschuss, um eine Anfangsbedingung des Betriebs der Erweiterung zu ermitteln.

14. Verfahren nach Anspruch 7, des Weiteren umfassend das Kommunizieren von Informationen in Verbindung mit dem elektronischen Buch über eine Anwendungsprogrammierschnittstelle mit der Erweiterung.

15. Nicht flüchtiges computerlesbares Speichermedium, das ausführbare Computerprogrammanweisungen enthält, die einen Computer veranlassen, ein Verfahren nach einem der Ansprüche 7 bis 14 auszuführen.

## Revendications

1. Système de livre électronique, comprenant :
un sous-système de traitement d'éditeurs configuré pour permettre la fourniture, par un premier éditeur d'un livre électronique, et la fourniture, par un second éditeur, d'une extension, l'extension comprenant un rajout exécutable qui est mis en oeuvre par le biais d'un lancement provoqué et qui fournit une fonctionnalité liée au livre ;
un sous-système de distribution configuré pour fournir l'extension à un utilisateur du système de livre électronique pour l'utilisation avec un lecteur de livre électronique ; et
un sous-système d'annotations, couplé de manière fonctionnelle au lecteur de livre électronique, configuré pour ajouter l'extension au livre sous forme d'annotation, où un paramètre de lancement pour la détermination d'une condition initiale de l'ajout est sensible à une partie affichée du livre.

2. Système de livre électronique selon la revendication 1, dans lequel le sous-système de traitement d'éditeurs est en outre configuré pour permettre la fourniture, par le premier éditeur, d'une ou plusieurs politiques de livres, où au moins une des politiques de livres spécifie une manière dont le livre peut être utilisé en combinaison avec l'extension, et/ou dans lequel le sous-système de traitement d'éditeurs est en outre configuré pour permettre la fourniture, par le second éditeur, d'une ou plusieurs politiques d'extensions, où au moins une des politiques d'extension spécifie une manière dont le livre peut être utilisé en combinaison avec l'extension.

3. Système de livre électronique selon la revendication 1, dans lequel le sous-système d'annotations est configuré pour présenter une interface d'utilisateur sur le lecteur de livre électronique correspondant à l'utilisation de l'extension avec le livre.

4. Système de livre électronique selon la revendication 1, dans lequel l'extension est configurée pour un fonctionnement automatique au moment de l'attention d'un utilisateur sur une partie du livre, et/ou dans lequel l'extension est configurée pour présenter automatiquement une interface d'utilisateur à un emplacement dans le livre correspondant à l'utilisation de l'extension.

5. Système de livre électronique selon la revendication 1, dans lequel le paramètre de lancement de l'extension est un instantané graphique de la partie affichée du livre, et l'information dans l'instantané graphique est déchiffrée pour déterminer une condition initiale pour le fonctionnement de l'extension.

6. Système de livre électronique selon la revendication 1, dans lequel le système de livre électronique est configuré pour fournir une interface de programmation d'applications pour la communication avec l'extension.

7. Procédé mis en oeuvre par ordinateur pour la fourniture d'une extension pour un livre électronique, l'extension comprenant un ajout exécutable qui est mis en oeuvre par le biais d'un lancement provoqué et qui fournit une fonctionnalité liée au livre, le procédé comprenant : la sélection de l'extension pour le fonctionnement avec le livre électronique ; la récupération de l'extension à partir d'une base de données ; et
l'association de l'extension pour une utilisation avec le livre en tant qu'annotation ajoutée au livre, où un paramètre de lancement pour la détermination d'une condition initiale de l'ajout est sensible à une partie affichée du livre électronique.

8. Procédé selon la revendication 7, comprenant, en outre, la récupération d'une ou plusieurs politiques de livre correspondant au livre électronique à partir d'une base de données de politiques, où au moins une des politiques de livre spécifie une manière dont le livre électronique peut être utilisé en combinaison avec l'extension.

9. Procédé selon la revendication 7, comprenant, en outre, la récupération d'une ou plusieurs politiques d'extensions correspondant à l'extension à partir d'une base de données de politiques, où au moins une des politiques d'extensions spécifie une manière dont le livre électronique peut être utilisé en combinaison avec l'extension.

10. Procédé selon la revendication 7, dans lequel l'association de l'extension inclut l'annotation du livre électronique avec l'extension et/ou dans lequel l'association de l'extension inclut la présentation d'une interface d'utilisateur sur le livre électronique correspondant à l'utilisation de l'extension avec le livre électronique.

11. Procédé selon la revendication 7, comprenant, en outre, le lancement automatique du fonctionnement de l'extension en réponse à l'attention d'un utilisateur sur une partie du livre électronique.

12. Procédé selon la revendication 7, comprenant, en outre, la fourniture d'une interface d'utilisateur à un emplacement dans le livre électronique correspondant à l'utilisation de l'extension.

13. Procédé selon la revendication 7, dans lequel le paramètre de lancement est un instantané graphique de la partie du livre électronique, le procédé comprenant, en outre, le déchiffrage de l'information dans l'instantané graphique pour déterminer une condition initiale pour le fonctionnement de l'extension.

14. Procédé selon la revendication 7, comprenant, en outre, la communication d'informations liées au livre électronique par le biais d'une interface de programmation d'applications avec l'extension.

15. Support de stockage non transitoire lisible par ordinateur contenant des instructions de programme exécutables par ordinateur pour faire en sorte qu'un ordinateur exécute un procédé selon l'une quelconque des revendications 7 à 14.
